# FASCICULE DE BREVET EUROPEEN

(11) **EP 1 022 088 B1**
(45) Date de publication et mention de la délivrance du brevet: **23.03.2005**
(21) Numéro de dépôt: 00400106.1
(22) Date de dépôt: 17.01.2000
(51) Int. Cl.: B23P 19/02

(54) **Procédé et machine d'extraction de tubes d'échangeurs**
Verfahren und Vorrichtung zum Herausziehen von Rohren bei Tauschern
Method and device for the extraction of tubes of exchangers

(30) Priorité: 20.01.1999 FR 9900567
(43) Date de publication de la demande: 26.07.2000
(73) Titulaire: Sarl Munch, 54390 Frouard (FR)
(72) Inventeur: Zimmermann, Christian, 88390 Darnieulles-Girancourt (FR)
(74) Mandataire: Bérogin, Francis

(56) Documents cités:
- EP-A- 0 519 345
- US-A- 3 785 026
- US-A- 3 908 258
- US-A- 4 125 928
- US-A- 4 312 124
- US-A- 4 406 856
- US-A- 4 586 695

## Description

L'invention concerne un procédé et une machine d'extraction de tubes d'un échangeur à tubes traversant des plaques tubulaires d'extrémité et des plaques intermédiaires de l'échangeur.

Les échangeurs à tubes concernés sont principalement les échangeurs thermiques, de type condenseurs de centrales thermiques et nucléaires, comprenant chacun un grand nombre de tubes rectilignes et parallèles, traversant des plaques tubulaires simples ou doubles aux extrémités de l'échangeur, ainsi que des plaques intermédiaires, entre les plaques tubulaires d'extrémité, dans lesquelles chaque tube est retenu par un simple ou double dudgeonnage à chacune de ses extrémités, selon que les plaques d'extrémité sont des plaques tubulaires respectivement simples ou doubles.

Actuellement, l'extraction des tubes de tels échangeurs s'effectue, en général, de façon unitaire, tube après tube, à l'aide de moyens semi-mécanisés, notamment une enrouleuse, après avoir mis manuellement en position le tube préalablement dédudgeonné à une extrémité arrachée vers l'extérieur de la plaque tubulaire d'extrémité correspondante, et après avoir coupé le tube dans l'échangeur à son autre extrémité. Les principaux inconvénients d'une extraction de tube à l'enrouleuse résident dans la nécessité d'amener le tube dédudgeonné jusqu'à l'enrouleuse et de maintenir l'axe de l'enrouleuse dans l'axe longitudinal du tube, pour permettre son extraction.

Le document US-A-3,785,026 décrit un procédé d'extraction d'une nappe de tubes. Selon ce document l'extraction est assurée par traction axiale obtenue par pincement en continu par la rotation de deux rouleaux. Ce document décrit les caractéristiques des préambules des revendications 1 et 7.

Il est également connu, mais peu pratiqué, d'extraire simultanément plusieurs tubes en grappe à l'aide de moyens semi-mécanisés, comprenant des treuils et des plaques percées. Les extrémités préalablement dédudgeonnées d'une grappe de tubes sont engagées chacune dans l'un des trous d'une plaque percée, qui est tirée sensiblement selon l'axe des tubes par un treuil, ce qui entraîne l'inclinaison de la plaque percée sur l'axe des tubes et le coincement des tubes dans les trous de la plaque percée. La traction de la plaque percée permet l'extraction des tubes de la grappe, l'outillage d'extraction et les tubes extraits étant reçus sur une plateforme de travail, de même dimension que la largeur du « poumon » de l'échangeur et située devant la plaque tubulaire d'extrémité correspondante, à hauteur des tubes à extraire. Les principaux inconvénients d'une telle extraction de tubes en grappe résident dans l'encombrement, devant la plaque tubulaire, de cette plateforme de travail, dont les dimensions doivent être suffisantes pour permettre la réception des tubes extraits sur toute leur longueur, pouvant atteindre douze mètres, et ceci sur toute la largeur du poumon de l'échangeur, ainsi que dans la dangerosité des tubes en mouvement en cours d'extraction ou après cette dernière.

Le problème à la base de l'invention est de remédier aux inconvénients précités des procédés connus d'extraction de tubes et de proposer un procédé et une machine de mise en oeuvre du procédé permettant d'extraire de façon entièrement mécanisée et simultanément un nombre relativement important de tubes dans des délais courts, de sorte à obtenir une grande rapidité d'exécution grâce à des cadences d'extraction très sensiblement augmentées, par des travaux bien moins pénibles et dangereux pour les opérateurs, compte tenu de la mécanisation du procédé.

L'idée à la base de l'invention consiste à extraire des tubes en nappes, chaque nappe comptant par exemple jusqu'à environ vingt tubes, en saisissant simultanément un ensemble de tubes formant une nappe, c'est-à-dire des tubes dont les axes longitudinaux sont sensiblement dans un même plan, puis en extrayant simultanément les tubes de la nappe en longueurs droites successives, et en cisaillant les tubes de la nappe pendant leur extraction, de préférence en longueurs réglables à la demande et/ou en fonction de la longueur totale des tubes, de façon à permettre une évacuation aisée des tronçons de tubes extraits.

Plus précisément, le procédé selon l'invention, pour l'extraction de tubes d'un échangeur à tubes du type général présenté ci-dessus, se caractérise en ce qu'il comprend au moins les étapes consistant, après une extraction partielle d'au moins une nappe de tubes, dont les axes sont sensiblement dans un même plan, de sorte que les extrémités des tubes situées d'un même côté de l'échangeur sont en saillie à l'extérieur de la plaque tubulaire d'extrémité correspondante (du même côté de l'échangeur),
a) à pincer par l'extérieur les tubes de ladite nappe à proximité de ladite plaque tubulaire,
b) à exercer une traction sensiblement axiale (selon les axes des tubes) simultanément sur les tubes pincés de ladite nappe, de sorte à extraire une longueur droite des tubes de la nappe hors de ladite plaque tubulaire,
c) à relâcher les tubes de ladite nappe,
d) à répéter le cycle des étapes a) à c) ci-dessus de sorte à extraire la nappe de tubes en longueurs droites successives,
e) à engager la nappe de tubes en cours d'extraction dans une cisaille, et
f)à cisailler la nappe de tubes en tronçons successifs.

Avantageusement, le pincement et le relâchement des tubes aux étapes respectivement a) et c) sont effectués sensiblement simultanément sur tous les tubes de ladite nappe, et la traction de l'étape b) est exercée en prenant appui de l'extérieur contre ladite plaque tubulaire.

En outre, il est avantageux de répéter le cycle des étapes a) à c) un nombre suffisant de fois jusqu'à l'extraction totale des tubes de la nappe, en exécutant l'étape f) de cisaillage au moins jusqu'à l'avant-dernier cycle des étapes a) à c), pour permettre un enlèvement manuel et/ou par gravité du dernier tronçon des tubes extraits et cisaillés sans qu'un cisaillage consécutif au dernier cycle des étapes a) à c) ne laisse dans la machine de mise en oeuvre du procédé des tronçons, très courts et gênants, des tubes extraits.

Il est de plus très avantageux que le procédé comprenne également l'étape supplémentaire consistant, après chaque cycle des étapes a) à c), à exercer sur les tubes de la nappe, en avant de leur engagement dans la cisaille, une action de retenue s'opposant au retour des tubes vers la plaque tubulaire.

Pour faciliter l'évacuation des tronçons de tubes, le procédé peut comprendre également une étape consistant à évacuer les tronçons de tubes cisaillés, de manière continue, à l'aide d'au moins un convoyeur à bande, ou discontinue à l'aide d'au moins une benne.

Pour la mise en oeuvre du procédé propre à l'invention et présenté ci-dessus, la machine selon l'invention pour l'extraction de tubes d'échangeurs se caractérise en ce qu'elle comprend :
- une pince, comportant au moins une paire de mors allongés, sensiblement parallèles, en vis-à-vis, transversalement à la nappe de tubes, et actionnés entre des positions de serrage et desserrage des tubes de la nappe entre les mors par un dispositif d'actionnement des mors,
- un dispositif de traction, comprenant au moins un actionneur de traction déplaçant la pince sur un châssis support en va-et-vient entre une position rapprochée de la plaque tubulaire, pour le serrage des tubes de la nappe, et une position écartée de la plaque tubulaire, par appui dudit actionneur de traction sur ladite plaque tubulaire, pour exercer une traction sur les tubes pincés,
- une cisaille, disposée sur le châssis support en arrière de la pince, et comportant au moins un couteau mobile transversalement à la nappe de tubes et actionné par au moins un actionneur de découpe fixé sur le châssis support, et
- des moyens de guidage et d'anti-retour, disposés sur le châssis support entre la pince et la cisaille, et guidant les tubes de la nappe vers la cisaille au cours des extractions en longueurs droites successives lors des déplacements de la pince vers la position écartée de la plaque tubulaire, et empêchant le retour des tubes de la nappe vers la plaque tubulaire lors des déplacements de la pince vers la position rapprochée de ladite plaque tubulaire.

La pince est avantageusement agencée sensiblement en caisson coulissant sur le châssis support et ouvert vers l'avant, en direction de ladite plaque tubulaire, pour le passage des tubes de la nappe, les deux mors étant disposés transversalement dans le caisson coulissant de sorte à délimiter entre eux une fente de serrage des tubes, et le dispositif d'actionnement des mors comprend au moins un actionneur entraînant les mors de sorte à faire varier la largeur de ladite fente de serrage des tubes, de sorte qu'en position de serrage des mors, les tubes de la nappe sont partiellement écrasés entre les mors.

De préférence, les mors sont montés rotatifs autour de leurs axes longitudinaux dans les côtés du caisson coulissant, et sont solidaires en rotation, à l'une au moins de leurs extrémités, de pignons dentés entraînés en rotation en sens contraires par une transmission à engrenages en prise avec au moins une crémaillère déplacée par au moins un vérin d'assistance, linéaire, à double effet, dont le cylindre et la tige sont solidaires en mouvement l'un du caisson coulissant et l'autre de la crémaillère mobile sur le caisson coulissant.

Avantageusement, de tels mors sont de forme externe générale sensiblement cylindrique et présentent chacun une section transversale en spirale à facettes divergente dans le sens contraire au sens de rotation des mors au serrage, de sorte à obtenir des mors auto-serrant lors de la traction de la pince entraînant les tubes.

Dans une forme de réalisation avantageusement simple et pratique, le dispositif de traction comprend au moins un actionneur linéaire à double effet, tel qu'un vérin hydraulique, qui est de préférence guidé dans le châssis support, et dont le cylindre et la tige sont solidaires en mouvement l'un du caisson coulissant et l'autre du châssis support, à l'extrémité avant de ce dernier, prenant appui contre ladite plaque tubulaire, de préférence par l'intermédiaire de butées latérales solidaires de l'extrémité avant du châssis support.

La cisaille comprend avantageusement un couteau fixe cranté, fixé sur le châssis support transversalement à la nappe de tubes, et un couteau mobile avec deux arêtes de coupe rectilignes en V à pointe dirigée vers le couteau fixe, le couteau mobile étant axialement décalé par rapport au couteau fixe pour glisser le long d'une face de ce dernier, et étant guidé dans au moins un étrier fixé sur le châssis support et supportant au moins un actionneur linéaire à double effet, tel qu'un vérin hydraulique, actionnant le couteau mobile.

Les moyens de guidage et d'anti-retour des tubes de la nappe comprennent avantageusement deux plaques de tôle disposées transversalement à la nappe de tubes et inclinées l'une vers l'autre et vers la cisaille, pour former un entonnoir guidant les tubes de la nappe vers la cisaille, chacune des deux plaques de tôle étant doublée, sur sa face arrière tournée vers la cisaille, par une plaque d'un matériau flexible, tel que du caoutchouc, qui s'étend au-delà du bord arrière de la plaque de tôle correspondante jusqu'à proximité de l'extrémité arrière de la plaque de matériau flexible de l'autre plaque de tôle, de sorte que les extrémités arrière des deux plaques de matériau flexible s'écartent l'une de l'autre au passage de la nappe de tubes et s'appuient élastiquement contre les tubes pour empêcher leur retour vers la plaque tubulaire.

Pour s'adapter à l'architecture du « poumon » de l'échangeur, et permettre l'extraction de nappes de tubes horizontales, verticales ou inclinées dans n'importe quelle direction, il est en outre avantageux que le châssis support, la pince, le dispositif de traction, la cisaille et les moyens de guidage et d'anti-retour soient agencés en un équipage mobile, monté tourillonnant autour de l'axe d'un pivot sensiblement parallèle aux axes des tubes de la nappe, la position dudit équipage mobile autour de l'axe du pivot étant réglable par des moyens d'entraînement et de blocage en rotation, de sorte que la nappe de tubes peut avoir toute position angulaire voulue autour dudit pivot.

Avantageusement, les moyens d'entraînement et de blocage en rotation comprennent au moins une couronne dentée sur un gousset au moins en partie en forme de disque sensiblement circulaire, reliant le châssis support de l'équipage mobile au pivot, ladite couronne dentée étant en prise avec une vis sans fin montée en rotation sur un support du pivot, et de préférence motorisée par un moteur électrique.

De plus, le pivot et l'équipage mobile peuvent être simultanément translatables parallèlement à l'axe du pivot entre une position d'appui du châssis support contre ladite plaque tubulaire, de préférence par l'intermédiaire de butées latérales sur l'extrémité avant du châssis support, et une position écartée de ladite plaque tubulaire pour éviter toute interférence avec des organes en saillie sur l'extérieur de ladite plaque tubulaire.

Dans un mode de réalisation préféré, le pivot est monté en rotation autour de son axe et translatable axialement dans un manchon du support de pivot, et ladite vis sans fin, en prise avec ladite couronne dentée supportée par un gousset solidaire en rotation et translation du pivot, est montée en rotation dans un fourreau solidaire d'un gousset monté translatable, parallèlement au pivot, à l'aide de galets sur une platine dudit support de pivot.

Pour pouvoir déplacer l'équipage mobile en regard de toute la surface de la plaque tubulaire, par des déplacements verticaux et/ou horizontaux combinés avec des rotations autour de l'axe du pivot, le pivot est avantageusement supporté par une console déplaçable et réglable en position sensiblement verticale sur un bâti de positionnement de la machine devant ladite plaque tubulaire, ce bâti étant solidaire d'un chariot, de préférence motorisé, déplaçable sensiblement transversalement devant ladite plaque tubulaire.

De manière simple, cette console est déplaçable sensiblement verticalement en étant montée coulissante le long d'au moins un montant sensiblement vertical dudit bâti, par au moins deux galets roulant contre des faces opposées dudit montant et montés en rotation autour d'axes, de préférence amovibles, s'étendant entre les deux flans d'un étrier de la console, lequel étrier est traversé par ledit montant. De préférence, cette console est déplaçable sensiblement verticalement dans un cadre du bâti et est montée coulissante le long de l'un ou de l'autre de deux montants sensiblement verticaux et latéraux de ce cadre. En outre, la console peut être positionnée verticalement le long du montant sur lequel la console coulisse à l'aide d'au moins un ensemble vis sans fin-écrou, dont l'écrou est solidaire de ladite console, et la vis sans fin est retenue verticalement le long dudit montant et entraînée en rotation par un moteur supporté par le bâti.

De plus, les vis sans fin retenues le long des montants du bâti sont avantageusement entraînées en rotation à la même vitesse par un unique moteur, à l'aide d'une transmission à chaîne ou courroie reliant un pignon sur l'arbre de sortie du moteur à des pignons solidaires des vis sans fin.

Concernant le chariot, ce dernier comprend avantageusement au moins deux essieux, dont l'un au moins est motorisé et entraîné par un autre moteur supporté par le chariot, chaque essieu supportant de préférence au moins un galet avant à joue, roulant et guidé sur un rail avant disposé transversalement devant ladite plaque tubulaire, ainsi qu'au moins un galet arrière roulant sur un rail arrière sensiblement parallèle au rail avant.

D'autres avantages et caractéristiques de l'invention ressortiront de la description donnée ci-dessous, à titre non limitatif, d'un exemple de réalisation décrit en référence aux dessins annexés sur lesquels :
- la figure 1 est une vue d'ensemble de la machine, en partie en élévation latérale parallèlement aux tubes, et en partie en coupe schématique,
- la figure 2 est une vue à plus grande échelle d'une partie de la figure 1,
- la figure 3 est une vue d'ensemble de la machine en partie en élévation de l'arrière, parallèlement à la plaque tubulaire, et en partie en coupe schématique,
- la figure 4 est une vue à plus grande échelle de la partie centrale de la figure 3,
- la figure 5 est une vue en partie de dessus et en partie en coupe de la machine,
- la figure 6 est une vue à plus grande échelle en élévation de l'avant, parallèlement à la plaque tubulaire, de l'équipage mobile de la machine,
- la figure 7 est une vue schématique en élévation latérale de l'équipage mobile,
- les figures 8 et 9 sont des vues partielles en coupe longitudinale respectivement verticale et horizontale de l'équipage mobile au niveau de la pince, et
- la figure 10 est une représentation schématique de douze étapes successives a) à *l*) (de haut en bas sur la figure) de l'extraction d'une nappe horizontale de tubes d'un échangeur avec la machine des figures 1 à 9.

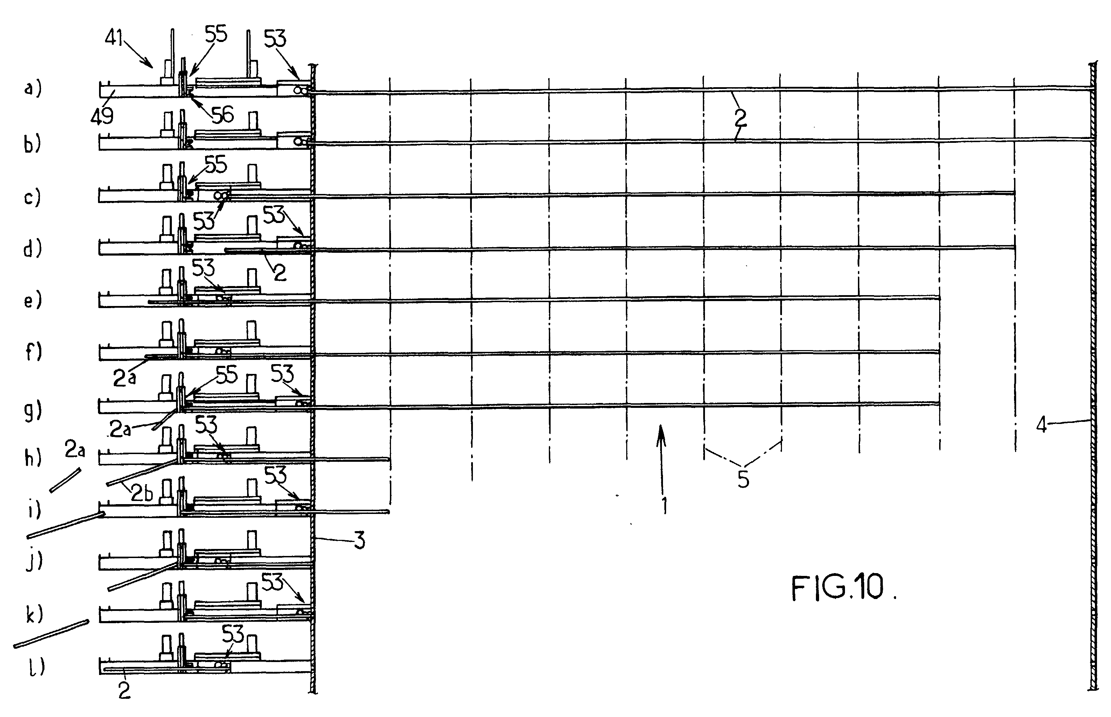

Sur la figure 10, l'échangeur tubulaire 1, dont des tubes 2 doivent être extraits, est représenté schématiquement avec deux simples plaques tubulaires d'extrémités 3 et 4 entre lesquelles s'étendent des plaques intermédiaires schématisées en 5, les tubes 2 parallèles entre eux traversant les plaques 3, 4 et 5 parallèles entre elles, en étant chacun retenu par un simple dudgeonnage, à chacune de ses extrémités, dans l'une respectivement des plaques tubulaires 3 et 4.

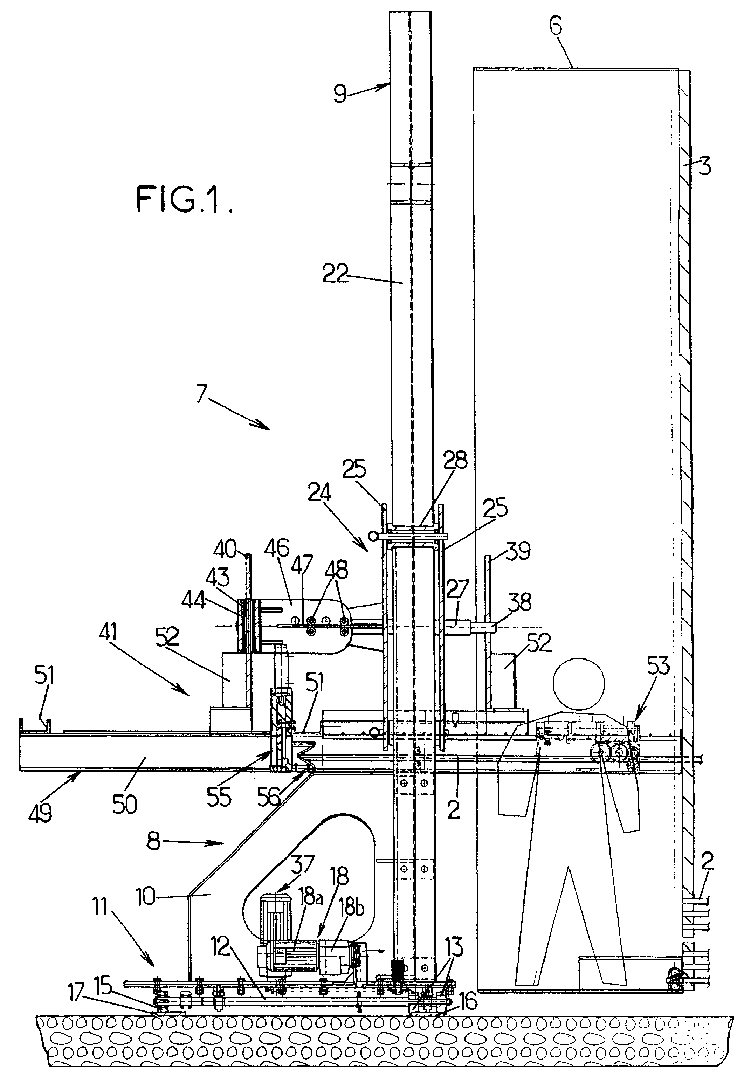

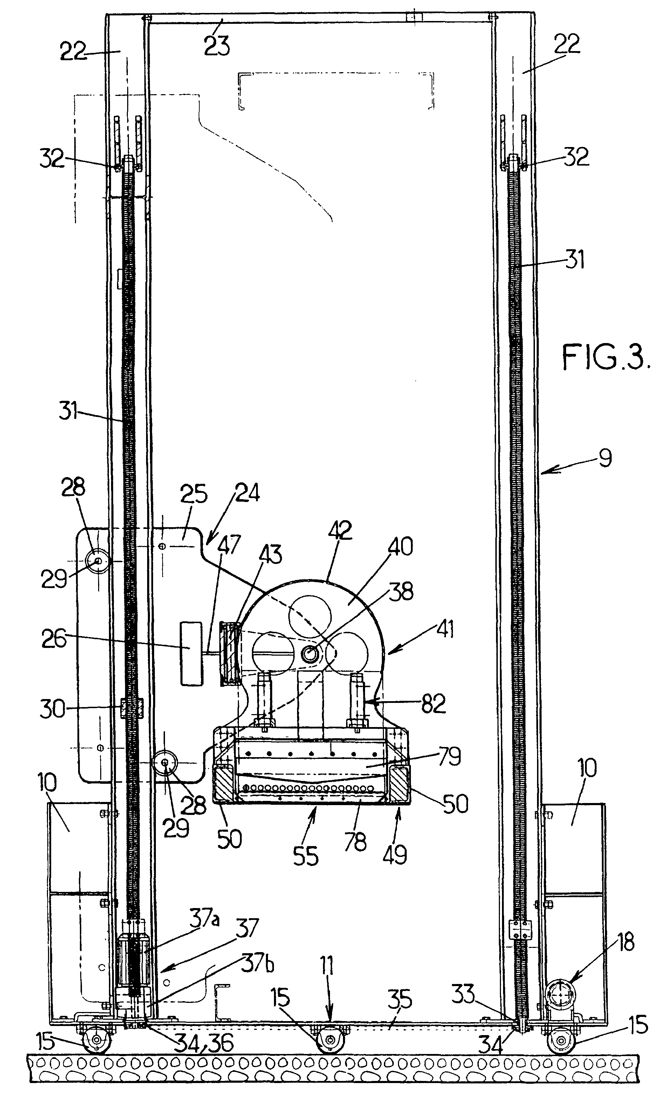

L'extraction d'une nappe de tubes 2, c'est-à-dire d'un certain nombre de tubes 2, pouvant par exemple atteindre vingt tubes, formant une nappe parce que les axes longitudinaux de ces tubes 2 sont sensiblement dans un même plan, selon le procédé de l'invention et à l'aide de la machine d'extraction représentée sur les figures 1 à 9 intervient après une étape préalable, qui consiste, avec des dispositifs connus à griffes, en une extraction partielle des tubes 2 de la nappe par arrachement, vers l'extérieur de l'échangeur 1, des dudgeonnages à une extrémité de ces tubes 2, suivi d'une traction de ces tubes 2 sur une distance d'environ 80 mm à 100 m à l'extérieur d'une plaque tubulaire d'extrémité de l'échangeur 1, par exemple la plaque tubulaire 3, alors que les tubes 2 sont coupés à leur extrémité opposée, à l'intérieur de l'échangeur 1, c'est-à-dire à proximité immédiate de la plaque tubulaire 4.

Après cette étape préalable, la machine d'extraction 7 est positionnée devant la plaque tubulaire 3 (voir figure 1), en avant d'une manchette 6 de boîte à eau (non représentée) formant interface avec l'échangeur tubulaire 1.

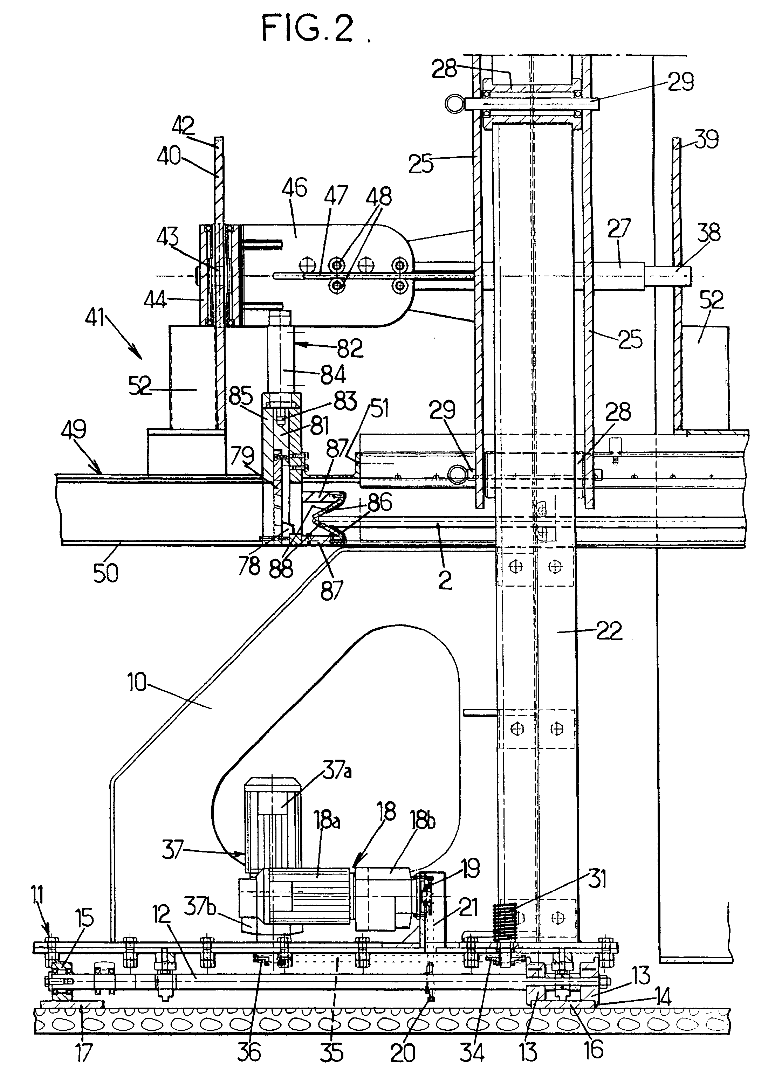

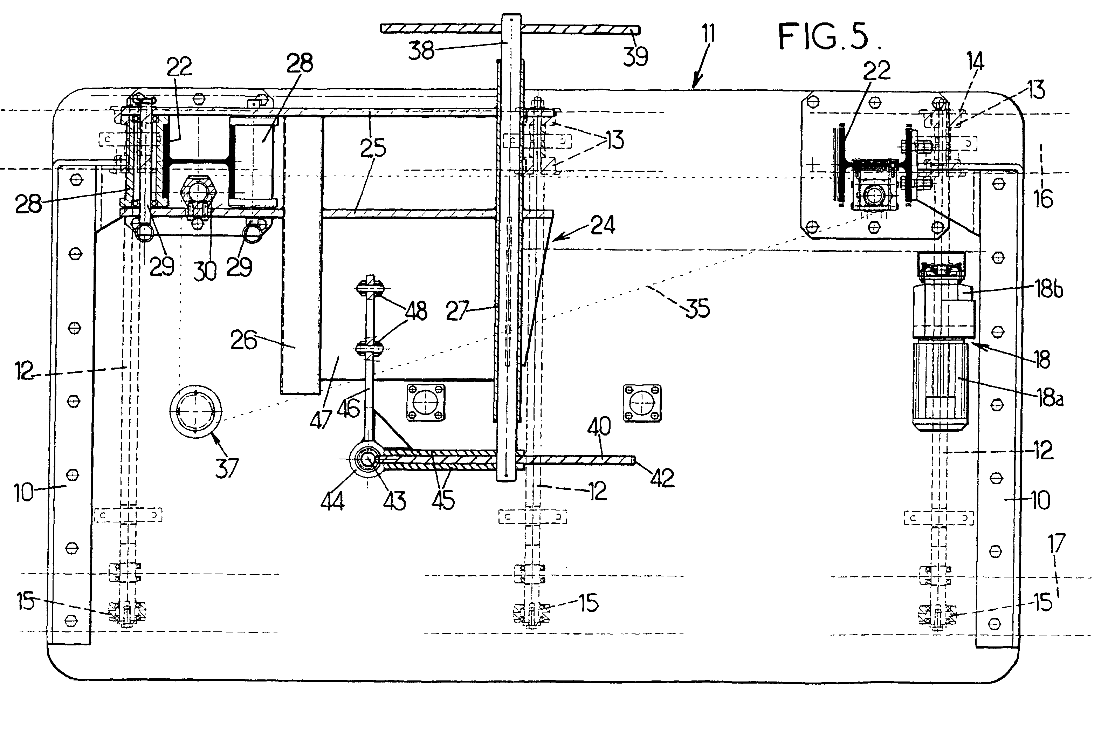

La machine 7 est agencée en tour élévatrice mobile, avec un bâti 8 rigide comportant un cadre 9 de positionnement et des raidisseurs 10 latéraux de base, solidaires d'un chariot 11 avec trois essieux 12 supportant chacun deux galets avant 13 à joue 14 et un galet arrière 15 (du côté opposé à la plaque tubulaire 3). Les galets avant 13 et arrière 15 roulent respectivement sur un rail avant 16 et un rail arrière 17 parallèles l'un à l'autre transversalement à la plaque tubulaire 3, c'est-à-dire sensiblement perpendiculaires aux axes longitudinaux des tubes 2, les galets avant 13 étant de plus guidés par leur joue 14 contre les côtés opposés du rail avant 16. L'un des essieux 12 (celui de droite sur la figure 5) est motorisé, pour déplacer la tour sur les rails 16 et 17, par un groupe moto-réducteur 18, dont le moteur électrique 18a entraîne un réducteur 18b ayant, sur son arbre de sortie, un pignon 19 entraînant un pignon 20 solidaire de cet essieu 12 par une transmission à chaîne ou courroie 21 (voir figure 2).

Le cadre 9 comprend deux montants verticaux 22, qui sont des profils métalliques de section en H, boulonnés par leur base sur le chariot 11, et entretoisés à leur extrémité supérieure par une traverse 23.

Une console 24 est déplaçable et réglable verticalement à l'intérieur du cadre 9, parallèle à la plaque tubulaire 3, en étant montée coulissante le long de l'un ou de l'autre des montants 22 verticaux et latéraux du cadre 9. A cet effet, la console 24 est agencée en étrier comprenant deux goussets plats et parallèles 25, rigidifiés notamment par un raidisseur 26, dans leur partie centrale, et par un manchon 27, au niveau des extrémités en pointe des goussets 25 vers l'intérieur du cadre 9. Du côté opposé à leur pointe, les goussets 25 de l'étrier s'étendent l'un sur la face avant et l'autre sur la face arrière du montant 22, le long duquel la console 24 est montée coulissante par deux galets 28, montés chacun en rotation entre les goussets d'étrier 25, autour d'un axe amovible 29 traversant ces goussets 25, de sorte que les deux galets 28, de forme cylindrique, roulent l'un, en position haute sur la console 24, contre la face latérale externe du montant 22, et l'autre, en position basse sur la console 24, contre la face latérale interne de ce même montant 22. Les galets 28 délimitent ainsi, entre les flans ou goussets 25 de l'étrier de la console 24, un cadre traversé par le montant 22 correspondant. On comprend que, par le retrait des axes amovibles 29 puis leur remontage, il est possible de désolidariser la console 24 d'un montant 22 par l'enlèvement des galets 28, puis de remonter la console 24 coulissante autour de l'autre montant 22.

Le positionnement vertical de cette console 24 le long de celui des montants 22 sur lequel la console 24 coulisse est assuré par un écrou 30 fixé, par exemple par des vis, sur la face avant du flan ou gousset d'étrier 25 arrière (voir figure 5) de sorte à se loger dans l'évidement arrière du montant 22, et cet écrou 30 rigidement lié à la console 24 est engagé sur l'une de deux vis sans fin verticales 31, dont chacune est retenue verticalement dans l'évidement arrière de l'un respectivement des montants 22, en étant montée en rotation autour de son axe longitudinal et vertical dans cet évidement, notamment par un palier 32 à son extrémité supérieure et un palier 33 dans la plateforme du chariot 11. Les paliers 33 sont traversés par les extrémités inférieures des vis 31, solidaires en rotation, à ce niveau, chacune de l'un de deux pignons 34, entraînés à la même vitesse de rotation par une transmission à chaîne ou courroie 35 les reliant au pignon d'entraînement 36 (sous la plateforme du chariot 11) sur l'arbre de sortie du réducteur 37b entraîné par le moteur électrique 37a d'un groupe moto-réducteur 37 porté par le chariot 11 et le bâti 8, pour la motorisation des vis sans fin 31 (voir figures 2, 3 et 5).

Le manchon 27 de la console 24 supporte un pivot 38 coaxial au manchon 27 et monté rotatif autour de son axe et translatable parallèlement à son axe, sur une course limitée, dans ce manchon 27. Par le positionnement de la machine 7 sur les rails 16 et 17, l'axe du pivot 38 est sensiblement parallèle aux axes longitudinaux des tubes 2.

Un équipage mobile 41, plus précisément décrit ci-dessous en référence aux figures 1 à 4 et 6 à 9, est solidaire en mouvement du pivot 38 par rapport à la console 24 par l'intermédiaire d'un gousset avant 39 et d'un gousset arrière 40, solidaires en mouvement respectivement de l'extrémité avant et de l'extrémité arrière du pivot 38, et ayant chacun la forme d'un disque circulaire sur une partie de sa périphérie.

Les déplacements d'ensemble de l'équipage mobile 41 avec les goussets 39 et 40 et le pivot 38, parallèlement à l'axe de ce dernier, sur une course d'environ 150 mm par exemple, et dont l'intérêt est précisé ci-dessous, sont assurés manuellement par un opérateur ou avec l'assistance d'un vérin pneumatique (non représenté). Les déplacements d'ensemble de l'équipage mobile 41 avec les goussets 39 et 40 et le pivot 38 en rotation autour de l'axe de ce dernier, ainsi que le positionnement de ces organes 41, 40, 39, 38 en rotation, sont respectivement assurés et réglés par une couronne dentée 42 sur la périphérie de la partie en disque circulaire du gousset arrière 40, cette couronne dentée 42 étant en prise avec une vis sans fin 43 montée en rotation dans un fourreau 44 supporté par la console 24, la vis 43 étant de préférence motorisée, et entraînée par exemple par un moteur électrique (non représenté) supporté par le fourreau 44. Entre le fourreau 44 et le pivot 38, la couronne dentée 42 et le gousset arrière 40 sont guidés entre deux flasques parallèles 45, verticaux et perpendiculaires au pivot 38, ces flasques 45 étant solidaires du fourreau 44, lui-même solidaire d'un gousset vertical 46 en U chevauchant une platine 47 horizontale rigidement fixée au raidisseur 26 et au gousset d'étrier arrière 25 de la console 24. Le gousset vertical 46 est monté coulissant sur la platine 47, parallèlement au pivot 38 et sur la même course que ce dernier, grâce à des galets 48 montés rotatifs autour d'axes transversaux du gousset 46 et roulant sur les faces opposées de la platine 47, de sorte que la vis sans fin 43 puisse suivre les translations de la couronne dentée 42 avec le gousset arrière 40 et le pivot 38, selon l'axe de ce dernier, tout en restant en prise avec la couronne dentée 42. La couronne dentée 42 et la vis sans fin 43 constituent ainsi des moyens d'entraînement et de blocage en rotation de l'équipage mobile 41 dans toute position angulaire voulue autour de l'axe du pivot 38.

L'équipage mobile 41 comprend un châssis 49, comportant deux longerons latéraux 50, sensiblement parallèles entre eux et aux tubes 2, et constitués de profilés de section en U ouverts l'un vers l'autre, ces longerons 50 étant entretoisés par des traverses telles que 51, et de sorte que l'équipage mobile 41 est solidaire en mouvement du pivot 38 par son châssis 49 rigidement lié aux goussets avant 39 et arrière 40 avec l'assistance de renforts de rigidification tels que 52. Le châssis 49 de l'équipage mobile 41 supporte, à l'avant (vers la plaque tubulaire 3), une pince 53 pour pincer simultanément tous les tubes 2 de la nappe à extraire, un dispositif de traction 54, prenant appui sur le châssis support 49 pour écarter la pince 53 de la plaque tubulaire 3 et exercer une traction dans l'axe des tubes 2 de la nappe, une cisaille 55 supportée sur le châssis 49 en arrière de la pince 53 et du dispositif de traction 54, ainsi qu'un mécanisme 56 de guidage et de retenue des tubes 2, ce mécanisme 56 étant disposé juste en avant de la cisaille 55.

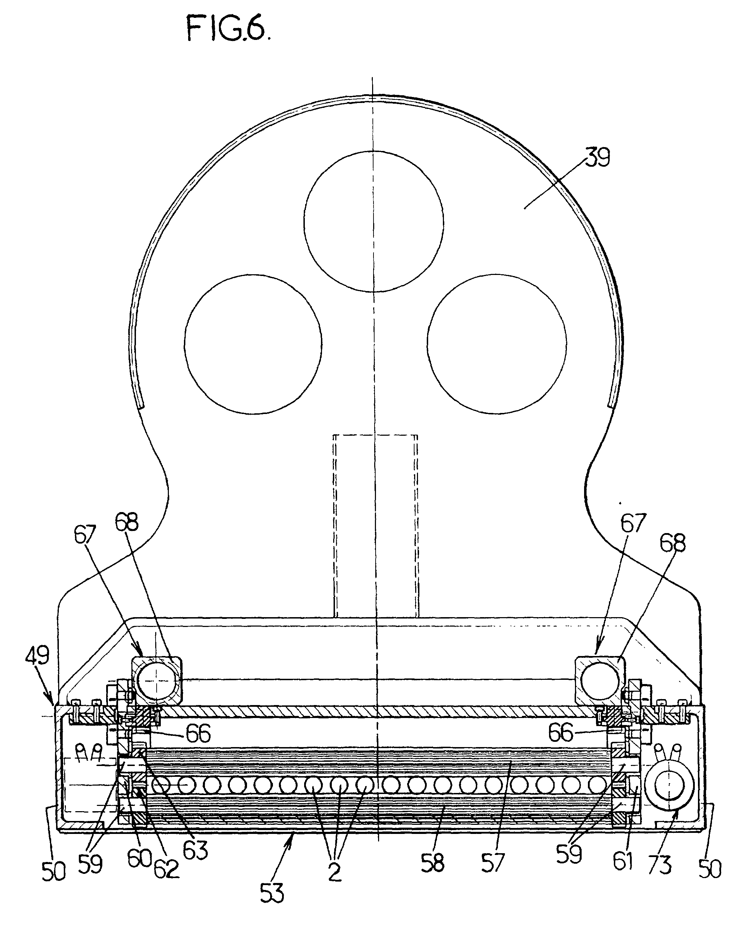

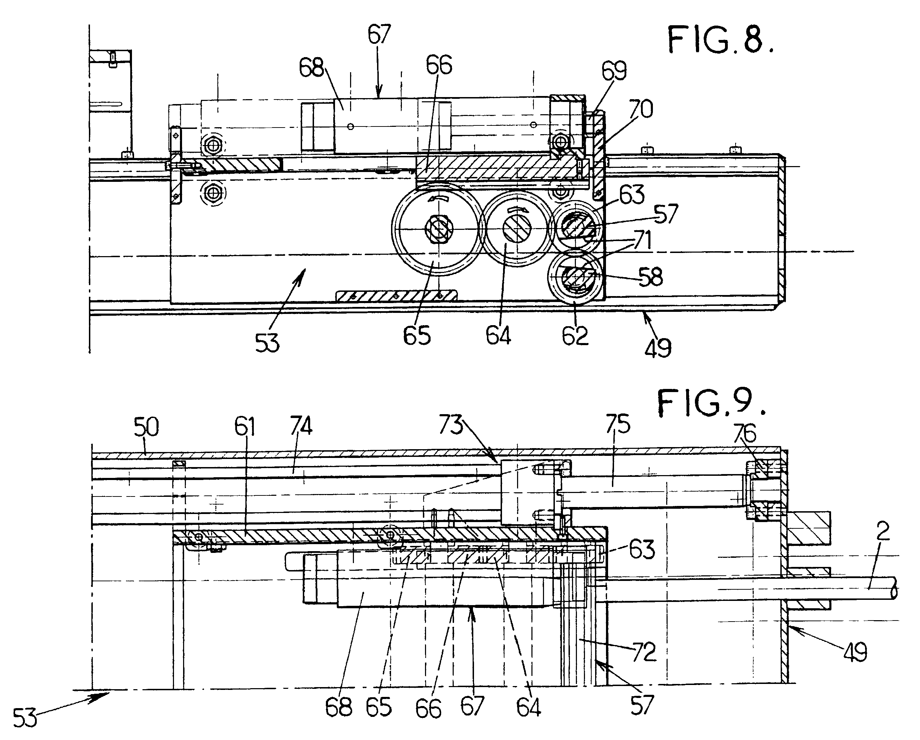

La pince 53, plus précisément représentée sur les figures 6, 8 et 9, est agencée en caisson ouvert vers l'avant et l'arrière, pour l'entrée dans la pince 53 et la sortie des tubes 2, et monté coulissant longitudinalement (parallèlement aux axes longitudinaux des tubes 2) entre les parties avant des longerons 50 du châssis support 49. La pince 53 comprend un mors supérieur 57 et un mors inférieur 58, qui ont une forme générale externe sensiblement cylindrique, et sont allongés parallèlement l'un à l'autre et transversalement aux tubes 2 de la nappe (laquelle comprend dix-huit tubes 2 sur la figure 6) dans le caisson coulissant, et en vis-à-vis l'un au-dessus de l'autre, en délimitant entre eux une fente de largeur variable pour le serrage des tubes 2. Les axes longitudinaux des mors 57 et 58 sont donc parallèles dans un même plan perpendiculaire aux axes des tubes 2, et chaque mors 57 ou 58 est monté en rotation, autour de son axe longitudinal, par deux tourillons d'extrémité 59 dans les côtés 60 et 61 du caisson coulissant de pince 53. Les mors 57 et 58 sont entraînés en rotation, pour faire varier la largeur de la fente, entre une position de desserrage et une position de serrage des tubes 2 de la nappe entre les mors 57 et 58, par un dispositif d'actionnement qui comprend, de chaque côté du caisson coulissant de pince 53, un pignon denté inférieur 62, solidaire en rotation du tourillon 59 à l'extrémité correspondante du mors inférieur 58, et en prise avec un pignon denté 63 analogue solidaire du tourillon 59 de l'extrémité correspondante du mors supérieur 57, le pignon 63 étant lui-même en prise avec une roue dentée avant 64 entraînée en rotation par une roue dentée arrière 65 en prise avec une crémaillère longitudinale 66 fixée au cylindre longitudinal 68 d'un vérin hydraulique linéaire à double effet 67, dont l'extrémité de la tige 69 est fixée à une plaque avant 70, elle-même fixée sur le caisson coulissant de pince 53, pour former une butée d'appui du vérin 67 (voir figures 8 et 9).

Ainsi, lorsque les vérins hydrauliques 67 sont allongés, leurs tiges 69 prennent appui sur la butée 70 du caisson de pince 53 et leurs cylindres 68 sont translatés longitudinalement vers l'arrière sur le caisson de pince 53, en entraînant les crémaillères 66, qui font tourner les roues dentées 65 et 64 et les pignons dentés 63 et 62 dans les sens indiqués par les flèches sur la figure 8. En particulier, les mors 57 et 58 tournent en sens contraire, chacun vers l'arrière et vers la fente délimitée entre eux. Comme chacun des mors 57 et 58 présente une section transversale en spirale qui diverge dans le sens opposé au sens de rotation décrit ci-dessus, à partir d'un plat 71 légèrement incliné, en regard du plat 71 de l'autre mors 58 ou 57 et délimitant avec lui la fente d'engagement des tubes 2 en position desserrée des mors 57 et 58, et comme la spirale divergente de la section droite des mors est une spirale à facettes 72 planes successives, formant une succession d'arêtes transversales aux tubes 2 de la nappe, la rotation des mors 57 et 58 dans le sens mentionné ci-dessus, lors de l'allongement des vérins 67, entraîne la diminution de la largeur de la fente entre les mors 57 et 58, et donc le pincement simultané de tous les tubes 2 de la nappe entre des arêtes qui se resserrent et de sorte qu'en position de serrage des tubes 2 entre les mors 57 et 58, les tubes 2 de la nappe sont partiellement écrasés entre les mors.

Par contre, la commande de la rentrée des tiges 69 dans les cylindres 68 des vérins 67 entraîne la translation des crémaillères 66 et les rotations des roues dentées 65 et 64 et des pignons dentés 63 et 62 dans des sens opposés à ceux précédemment décrits, et a pour effet d'ouvrir la pince en augmentant la largeur de la fente entre les mors 57 et 58, ainsi entraînés en rotation en position de desserrage.

Le dispositif de traction 54 est aménagé pour déplacer le caisson de pince 53 sur le châssis support 49 en aller et retour le long des longerons 50 de ce châssis 49, entre une position dans laquelle le caisson de pince 53 est rapproché de la plaque tubulaire 3, pour le serrage des tubes 2 de la nappe, et une position dans laquelle le caisson de pince 53 est écarté de la plaque tubulaire 3, alors que le châssis support 49 prend appui contre cette plaque tubulaire 3, pour exercer une traction axiale sur les tubes 2, pincés entre les mors 57 et 58 serrés, et ainsi extraits de la plaque tubulaire 3 sur une longueur droite correspondant à la course du caisson de pince 53 sur le châssis support 49.

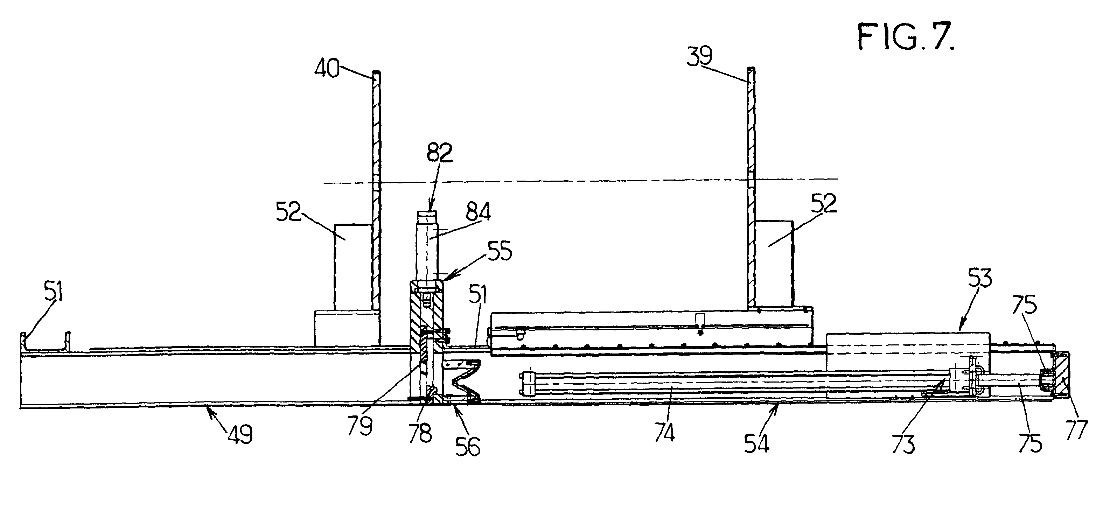

Ce dispositif de traction 54 comprend deux actionneurs linéaires 73, qui sont des vérins hydrauliques à double effet logés longitudinalement et guidés chacun dans l'un respectivement des longerons en « U » 50 du châssis support 49, entre le côté 60 ou 61 du caisson de pince 53 et ce longeron 50 (voir figure 6). Chaque vérin de traction 73 est fixé par son cylindre 74 à un côté 60 ou 61 du caisson de pince 53, tandis que l'extrémité de la tige 75 de ce vérin 73 est fixée à l'extrémité avant, du côté correspondant, du châssis support 49 par une liaison 76, située de préférence juste derrière une butée 77. Cette butée 77, par exemple en un matériau peu compressible et ne marquant pas la plaque tubulaire 3, tel que du P.F.T.E., est vissée sur l'avant du châssis support 49 de sorte à faire saillie vers l'avant de ce châssis 49, pour être interposée entre ce dernier et la plaque tubulaire 3, lorsque le châssis support 49 prend appui, par ses butées 77 (voir figure 7) contre la plaque tubulaire 3, grâce à la translation d'ensemble de l'équipage mobile 41 avec les goussets 39 et 40 et le pivot 38, parallèlement à l'axe de ce dernier, dans le manchon 27 de la console 24, comme expliqué ci-dessus.

Le pivot 38 et l'équipage mobile 41 sont ainsi simultanément translatables, parallèlement à l'axe du pivot 38, entre cette position avant ou d'appui du châssis support 49 par ses butées latérales avant 77 contre la plaque tubulaire 3, et une position arrière, écartée de la plaque tubulaire 3, pour éviter toute interférence avec des organes éventuellement en saillie sur l'extérieur de la plaque tubulaire 3, par exemple des tubes 2 partiellement extraits par leur extrémité en phase initiale d'extraction, avant mise en oeuvre de la machine de l'invention, ces interférences pouvant se produire précisément lors de la mise en place de l'équipage mobile 41, et en particulier de son châssis support 49 et du caisson de pince 53, en regard d'une nappe de tubes 2 à extraire.

En position rétractée des tiges 75 dans les cylindres 74 des vérins de traction 73, le caisson de pince 53 est en position maximum vers l'avant (vers la plaque tubulaire 3) sur le châssis support 49, et, après pincement des tubes 2 de la nappe entre les mors 57 et 58 du caisson de pince 53, comme expliqué ci-dessus, la commande de l'extension des vérins hydrauliques de traction 73 provoque, par l'appui des tiges de vérin 75 contre l'avant du châssis 49 et l'appui de ce dernier par les butées d'appui 77 contre la plaque tubulaire 3, le recul du caisson de pince 53 avec les cylindres 74, sur une course réglable au niveau des vérins 73. Une traction axiale est ainsi exercée par le caisson de pince 53 sur les tubes 2 de la nappe, et au cours de cette traction, les mors 57 et 58 exercent un effet d'auto-serrage sur les tubes 2 à raison de leur structure et géométrie.

A la fin d'une course de traction de la pince 53 serrée, par l'extension des vérins de traction 73, la pince 53 est desserrée par la rétraction des vérins 67, suivie de la rétraction des vérins de traction 73 pour ramener la pince 53 vers la plaque tubulaire 3, en vue d'un nouveau serrage de la pince 53 sur les tubes 2 de la nappe, suivi d'une nouvelle traction axiale sur les tubes 2 qui sont ainsi extraits en longueurs droites successives.

Les déplacements en aller et retour de la pince 53, serrée sur les tubes 2 de la nappe lorsque la pince 53 est écartée par les vérins de traction 73 de la plaque tubulaire 3, et desserrée lorsque cette pince 53 est ramenée par ces vérins 73 vers la plaque tubulaire 3, ont pour effet d'amener les tubes 2 de la nappe extraite vers la cisaille 55 et de les engager dans cette cisaille 55 disposée transversalement à la nappe de tubes 2, sur l'arrière du châssis support 49 par rapport à la pince 53 et au dispositif de traction 54, cette cisaille 55 coupant les tubes 2 de la nappe extraite en tronçons successifs de longueurs déterminées par le réglage de la course des vérins de traction 73, au cours de l'extraction en longueurs droites successives des tubes 2.

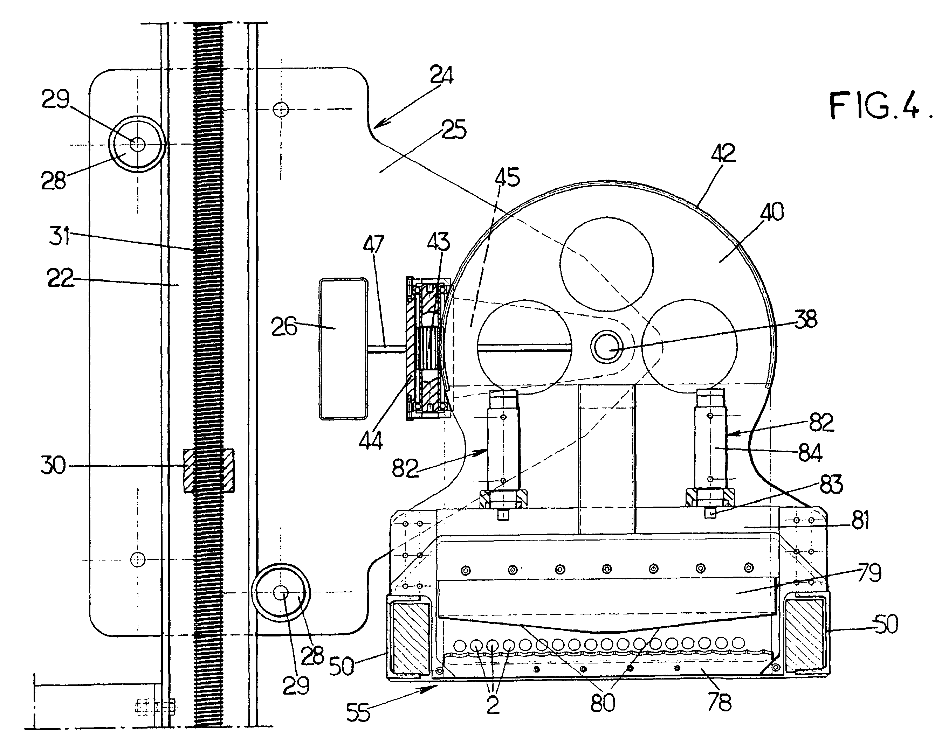

La cisaille 55, dont la structure apparaît plus clairement sur les figures 2, 4 et 7, comprend un couteau fixe 78 cranté et inférieur, fixé entre les longerons 50 du châssis support 49 perpendiculairement à la nappe de tubes 2, et un couteau mobile supérieur 79 qui présente, comme visible sur la figure 4, deux arêtes de coupe rectilignes 80 formant un « V » très ouvert à pointe dirigée vers le milieu du couteau fixe 78. Le couteau mobile 79 s'étend également perpendiculairement aux tubes 2 de la nappe, et il est boulonné le long de sa partie supérieure sur un coulisseau 81 vertical et transversal par rapport à la nappe de tubes 2, ce coulisseau 81 étant solidaire de l'extrémité des tiges 83 de deux vérins hydrauliques linéaires à double effet 82 fixés verticalement par leur cylindre 84 sur un étrier 85 monté transversalement sur le châssis support 49, et entre les deux branches duquel le coulisseau 81 et le couteau mobile 79 sont guidés dans leurs coulissements. Pour cisailler convenablement les tubes 2, le couteau mobile 79 est décalé axialement (selon l'axe des tubes 2) en arrière du couteau fixe 78 afin de glisser le long de la face arrière de ce dernier.

Les moyens 56 de guidage et d'anti-retour, disposés transversalement sur le châssis support 49 immédiatement en avant de la cisaille 55, assurent le guidage des tubes 2 de la nappe en arrière de la pince 53 vers la cisaille 55, au cours des extractions en longueurs droites successives résultant des déplacements de la pince 53 par les vérins de traction 73 vers la position arrière, écartée de la plaque tubulaire 3. Ces moyens 56 assurent aussi une autre fonction, qui est d'empêcher le retour des tubes 2 de la nappe vers la plaque tubulaire 3 après les desserrages de la pince 53 et lors des déplacements de cette pince 53 vers la position avant, rapprochée de la plaque tubulaire 3. Pour remplir ces deux fonctions de guidage et d'anti-retour des tubes 2 de la nappe, les moyens 56 comprennent deux plaques de tôle 86 métalliques rigides, disposées transversalement à la nappe de tubes 2 et inclinées l'une vers l'autre et vers la cisaille 55 de sorte à former un entonnoir avec un passage de largeur suffisante, entre les extrémités arrière rapprochées des deux plaques 86, pour guider les tubes 2 vers la cisaille 55, tandis que les extrémités avant recourbées des plaques 86 sont fixées par boulonnage contre des supports 87 transversaux montés entre les longerons 50 du châssis 49, immédiatement en avant de l'étrier 85 de la cisaille 55. Sur sa face arrière, tournée vers cette cisaille 55, chaque plaque de tôle 86 est doublée et sensiblement prolongée vers l'arrière par une plaque 88 d'un matériau flexible, tel que du caoutchouc. Chacune des plaques 88 s'étend ainsi vers l'arrière, au-delà du bord arrière de la plaque de tôle 86 correspondante, jusqu'à venir à proximité immédiate ou en contact avec l'extrémité arrière de l'autre plaque flexible 88, de sorte que, sous la poussée des tubes 2 de la nappe extraite, les parties arrière des plaques de matériau flexible 88 s'écartent l'une de l'autre pour laisser le passage aux tubes 2, tout en étant rappelées élastiquement l'une vers l'autre, contre la face latérale externe des tubes 2 de sorte à exercer sur ces derniers un frottement suffisant pour s'opposer à leur retour vers la plaque tubulaire 3, lorsque la pince 53 desserrée est déplacée de l'arrière vers l'avant.

Sur la figure 10, on a représenté schématiquement des étapes successives a) à *l*) de l'extraction d'une nappe de tubes 2 supposée horizontale par simplicité. A l'étape a), l'équipage mobile 41, regroupant la pince 53, le dispositif de traction 54, la cisaille 55, et les moyens de guidage et d'anti-retour 56 sur le châssis support 49, est translaté vers l'avant avec les goussets 39, 40 et le pivot 38 sur la console 24, pour mettre le châssis 49 en appui contre la face externe de la plaque tubulaire 3, la pince 53 étant desserrée, et ses deux mors positionnés de part et d'autre des extrémités, en saillie sur l'avant de la plaque tubulaire 3, d'une nappe de tubes 2 à extraire. Comme expliqué ci-dessus, l'extraction partielle des tubes 2 de cette nappe a été réalisée préalablement. A l'étape b), la pince 53 est serrée par les vérins 67, et les tubes 2 de la nappe sont simultanément pincés et partiellement déformés entre les mors 57 et 58 de la pince 53. Puis, à l'étape c), les vérins de traction 73 déplacent la pince 53 vers l'arrière (vers la cisaille 55), ce qui assure par traction l'extraction d'une longueur droite des tubes 2 de la nappe correspondant à la course des vérins de traction 73. A l'étape d), la pince 53 est desserrée et ramenée par les vérins 73 en position avant vers la plaque tubulaire 3, la partie extraite des tubes 2 n'étant pas suffisamment longue pour être déjà introduite dans la cisaille 55. A l'étape e), la pince 53, après un nouveau serrage sur les tubes 2 de la nappe, a été déplacée vers l'arrière par les vérins 73, ce qui a produit par traction l'extraction d'une nouvelle longueur droite des tubes 2, de sorte que la partie de ces derniers en arrière de la pince 53 a traversé les moyens 56 de guidage et d'anti-retour et a été engagée entre les deux couteaux 78 et 79 de la cisaille 55. A l'étape f), avant ou après le relâchement des tubes 2 par la pince 53, le couteau mobile 79 de la cisaille 55 est actionné de sorte à cisailler les extrémités 2a de la partie extraite des tubes 2. A l'étape g), alors que les tronçons cisaillés 2a des tubes 2 tombent sur un convoyeur à bande ou dans une benne (non représentés) pour leur évacuation en continu ou discontinue, la pince 53 desserrée est ramenée en position avant contre la plaque tubulaire 3 pour être à nouveau serrée sur les tubes 2, puis être à nouveau déplacés vers la cisaille 55 en tirant une nouvelle longueur droite des tubes 2, à la suite de quoi la longueur droite préalablement extraite est cisaillée par la cisaille 55, ce qui produit les tronçons de tubes 2b comme représenté à l'étape h). Ce cycle opératoire est répété autant de fois qu'il est nécessaire pour extraire les tubes 2 sur toute leur longueur, la course des vérins de traction 73 étant réglée en fonction de cette longueur des tubes 2. Les étapes i) et j) sont deux étapes successives analogues aux étapes g) et h) pour l'avant-dernière longueur droite de tubes 2 extraite, et qui donnent lieu au cisaillage de tronçons de tubes 2 correspondant à la longueur droite extraite immédiatement antérieurement. L'extraction de l'avant-dernière longueur droite peut être suivie d'un cycle opératoire sans étape de cisaillage, pour l'extraction de la dernière longueur de tubes 2, représentée sur les étapes k) et *l*), les derniers tronçons de tubes 2 pouvant être retirés manuellement ou tomber par gravité entre les longerons 50 du châssis 49, pour éviter qu'un cisaillage en fin d'extraction ne laisse subsister de courts tronçons de tubes 2 dans la machine.

Ainsi, à l'aide du procédé et de la machine d'extraction selon l'invention, des tubes de douze mètres de long peuvent être extraits, en nappes comptant jusqu'à environ vingt tubes, la nappe pouvant être horizontale, verticale ou inclinée dans n'importe quelle direction autour de l'axe du pivot 38 grâce au fait que l'équipage mobile 41 peut occuper toute position appropriée en regard de la plaque tubulaire 3, en raison des déplacements transversaux de la tour supportant l'équipage mobile 41, des déplacements verticaux de la console 24, supportant l'équipage mobile 41, le long des montants de la tour, et en raison du réglage et du blocage en rotation de l'équipage mobile 41 autour de l'axe du pivot 38, comme expliqué ci-dessus.

L'extraction entièrement mécanisée des tubes 2 en nappes, assurée à l'aide du procédé et de la machine de l'invention, permet des gains de temps considérables, puisqu'un échangeur peut comporter plusieurs dizaines de milliers de tubes, et sans présenter les inconvénients de dangerosité pour le personnel et de volume libre disponible à l'avant de la plaque tubulaire 3, que l'on rencontre avec la mise en oeuvre des matériels actuellement utilisés pour extraire les tubes d'échangeurs.

## Revendications

1. Procédé d'extraction de tubes (2) d'un échangeur (1) à tubes traversant des plaques tubulaires d'extrémité (3, 4) et des plaques intermédiaires (5) de l'échangeur (1),
**caractérisé en ce qu'**il comprend au moins les étapes consistant, après une extraction partielle d'au moins une nappe de tubes (2), dont les axes sont sensiblement dans un même plan, de sorte que les extrémités des tubes (2) situées d'un même côté de l'échangeur (1) sont en saillie à l'extérieur de la plaque tubulaire (3) d'extrémité correspondante,
a) à pincer par l'extérieur les tubes (2) de ladite nappe à proximité de ladite plaque tubulaire (3),
b) à exercer une traction sensiblement axiale, selon les axes des tubes, simultanément sur les tubes (2) pincés de ladite nappe, de sorte à extraire une longueur droite des tubes (2) de la nappe hors de ladite plaque tubulaire (3),
c) à relâcher les tubes (2) de ladite nappe,
d) à répéter le cycle des étapes a) à c) ci-dessus de sorte à extraire la nappe de tubes (2) en longueurs droites successives,
e) à engager la nappe de tubes (2) en cours d'extraction dans une cisaille (55), et
f) à cisailler la nappe de tubes (2) en tronçons (2a, 2b) successifs.

2. Procédé selon la revendication 1, **caractérisé en ce que** le pincement et le relâchement des tubes (2) de la nappe aux étapes respectivement a) et c) sont effectués sensiblement simultanément sur tous les tubes (2) de ladite nappe.

3. Procédé selon l'une des revendications 1 et 2, **caractérisé en ce que** la traction de l'étape b) est exercée en prenant appui de l'extérieur contre ladite plaque tubulaire (3).

4. Procédé selon l'une quelconque des revendications 1 à 3, **caractérisé en ce qu'**il consiste à répéter le cycle des étapes a) à c) un nombre suffisant de fois jusqu'à l'extraction totale des tubes (2) de la nappe, l'étape f) de cisaillage étant exécutée au moins jusqu'à l'avant-dernier cycle des étapes a) à c).

5. Procédé selon l'une quelconque des revendications 1 à 4, **caractérisé en ce qu'**il comprend l'étape supplémentaire consistant, après chaque cycle des étapes a) à c), à exercer sur les tubes (2) de la nappe, en avant de leur engagement dans la cisaille (55), une action de retenue s'opposant au retour des tubes (2) vers la plaque tubulaire.

6. Procédé selon l'une quelconque des revendications 1 à 5, **caractérisé en ce qu'**il comprend également une étape consistant à évacuer les tronçons (2a, 2b) de tubes (2) cisaillés, de manière continue, à l'aide d'au moins un convoyeur à bande, ou discontinue à l'aide d'au moins une benne.

7. Machine d'extraction de tubes (2) d'échangeurs (1), pour la mise en oeuvre du procédé selon l'une quelconque des revendications 1 à 6 précédentes, **caractérisée en ce qu'**elle comprend :
- une pince (53), comportant au moins une paire de mors (57, 58) allongés, sensiblement parallèles, en vis-à-vis, transversalement à la nappe de tubes (2), et actionnés entre des positions de serrage et desserrage des tubes (2) de la nappe entre les mors (57, 58) par un dispositif d'actionnement (67, 65, 64, 63, 62) des mors,
- un dispositif de traction (54), comprenant au moins un actionneur de traction (73) déplaçant la pince (53) sur un châssis support (49) en va-et-vient entre une position rapprochée de la plaque tubulaire (3), pour le serrage des tubes (2) de la nappe, et une position écartée de la plaque tubulaire (3), par appui dudit actionneur de traction (73) sur ladite plaque tubulaire (3), pour exercer une traction sur les tubes (2) pincés,
- une cisaille (55), disposée sur le châssis support (49) en arrière de la pince (53), et comportant au moins un couteau mobile (79) transversalement à la nappe de tubes (2) et actionné par au moins un actionneur de découpe (82) fixé sur le châssis support (49), et
- des moyens (56) de guidage et d'anti-retour, disposés sur le châssis support (49) entre la pince (53) et la cisaille (55), et guidant les tubes (2) de la nappe vers la cisaille (55) au cours des extractions en longueurs droites successives lors des déplacements de la pince (53) vers la position écartée de la plaque tubulaire (3), et empêchant le retour des tubes (2) de la nappe vers la plaque tubulaire (3) lors des déplacements de la pince (53) vers la position rapprochée de ladite plaque tubulaire (3).

8. Machine selon la revendication 7, **caractérisée en ce que** la pince (53) est agencée sensiblement en caisson coulissant sur le châssis support (49) et ouvert vers l'avant, en direction de ladite plaque tubulaire (3), pour le passage des tubes (2) de la nappe, les deux mors (57, 58) étant disposés transversalement dans le caisson coulissant de sorte à délimiter entre eux une fente de serrage des tubes (2), et le dispositif d'actionnement des mors (57, 58) comprend au moins un actionneur (67) entraînant les mors (57, 58) de sorte à faire varier la largeur de ladite fente de serrage des tubes (2), de sorte qu'en position de serrage des mors, les tubes (2) de la nappe sont partiellement écrasés entre les mors (57, 58).

9. Machine selon la revendication 8, **caractérisée en ce que** les mors (57, 58) sont montés rotatifs autour de leurs axes longitudinaux dans les côtés (60, 61) du caisson coulissant (53), et sont solidaires en rotation, à l'une au moins de leurs extrémités, de pignons dentés (62, 63) entraînés en rotation en sens contraires par une transmission à engrenages (64, 65) en prise avec au moins une crémaillère (66) déplacée par au moins un vérin (67) d'assistance, linéaire, à double effet, dont le cylindre (68) et la tige (69) sont solidaires en mouvement l'un du caisson coulissant (53) et l'autre de la crémaillère (66) mobile sur le caisson coulissant (53).

10. Machine selon la revendication 9, **caractérisée en ce que** les mors (57, 58) sont de forme externe générale sensiblement cylindrique et présentent chacun une section transversale en spirale à facettes (72) divergente dans le sens contraire au sens de rotation des mors (57, 58) au serrage.

11. Machine selon l'une quelconque des revendications 8 à 10, **caractérisée en ce que** le dispositif de traction (56) comprend au moins un actionneur (73) linéaire à double effet, tel qu'un vérin hydraulique, qui est de préférence guidé dans le châssis support (49), et dont le cylindre (74) et la tige (75) sont solidaires en mouvement l'un du caisson coulissant (53) et l'autre du châssis support (49), à l'extrémité avant de ce dernier, prenant appui contre ladite plaque tubulaire (3), de préférence par l'intermédiaire de butées (77) latérales solidaires de l'extrémité avant du châssis support (49).

12. Machine selon l'une quelconque des revendications 8 à 11, **caractérisée en ce que** la cisaille (55) comprend un couteau fixe cranté (78), fixé sur le châssis support (49) transversalement à la nappe de tubes (2), et un couteau mobile (79) avec deux arêtes de coupe (80) rectilignes en V à pointe dirigée vers le couteau fixe (78), le couteau mobile (79) étant axialement décalé par rapport au couteau fixe (78) pour glisser le long d'une face de ce dernier, et étant guidé dans au moins un étrier (85) fixé sur le châssis support (49) et supportant au moins un actionneur (82) linéaire à double effet, tel qu'un vérin hydraulique, actionnant le couteau mobile (79).

13. Machine selon l'une quelconque des revendications 8 à 12, **caractérisée en ce que** les moyens (56) de guidage et d'anti-retour des tubes (2) de la nappe comprennent deux plaques de tôle (86) disposées transversalement à la nappe de tubes (2) et inclinées l'une vers l'autre et vers la cisaille (55), pour former un entonnoir guidant les tubes (2) de la nappe vers la cisaille (55), chacune des deux plaques de tôle (86) étant doublée, sur sa face arrière tournée vers la cisaille (55), par une plaque (88) d'un matériau flexible, tel que du caoutchouc, qui s'étend au-delà du bord arrière de la plaque de tôle (86) correspondante jusqu'à proximité de l'extrémité arrière de la plaque (88) de matériau flexible de l'autre plaque de tôle (86), de sorte que les extrémités arrière des deux plaques (88) de matériau flexible s'écartent l'une de l'autre au passage de la nappe de tubes (2) et s'appuient élastiquement contre les tubes (2) pour empêcher leur retour vers la plaque tubulaire (3).

14. Machine selon l'une quelconque des revendications 7 à 13, **caractérisée en ce que** le châssis support (49), la pince (53), le dispositif de traction (54), la cisaille (55) et lesdits moyens (56) de guidage et d'anti-retour sont agencés en un équipage mobile (41), monté tourillonnant autour de l'axe d'un pivot (38) sensiblement parallèle aux axes des tubes (2) de la nappe, la position dudit équipage mobile (41) autour de l'axe du pivot (38) étant réglable par des moyens d'entraînement et de blocage en rotation (42, 43), de sorte que la nappe de tubes (2) peut avoir toute position angulaire voulue autour dudit pivot (38).

15. Machine selon la revendication 14, **caractérisée en ce que** lesdits moyens d'entraînement et de blocage en rotation comprennent au moins une couronne dentée (42) sur un gousset (40) au moins en partie en forme de disque sensiblement circulaire, reliant le châssis support (49) de l'équipage mobile (41) au pivot (38), ladite couronne dentée (42) étant en prise avec une vis sans fin (43) montée en rotation sur un support (24) du pivot (38), et de préférence motorisée par un moteur électrique.

16. Machine selon l'une quelconque des revendications 14 et 15, **caractérisée en ce que** ledit pivot (38) et ledit équipage mobile (41) sont simultanément translatables parallèlement à l'axe du pivot (38) entre une position d'appui du châssis support (49) contre ladite plaque tubulaire (3), de préférence par l'intermédiaire de butées (77) latérales sur l'extrémité avant du châssis support (49), et une position écartée de ladite plaque tubulaire (3) pour éviter toute interférence avec des organes en saillie sur l'extérieur de ladite plaque tubulaire (3).

17. Machine selon la revendication 16, **caractérisée en ce que** le pivot (38) est monté rotatif autour de son axe et translatable axialement dans un manchon (27) du support (24) de pivot, et **en ce que** ladite vis sans fin (43), en prise avec ladite couronne dentée (42) supportée par un gousset (40) solidaire en rotation et translation du pivot (38), est montée en rotation dans un fourreau (43) solidaire d'un gousset (46) monté translatable, parallèlement au pivot (38), à l'aide de galets (48) sur une platine (47) dudit support (24) de pivot.

18. Machine selon l'une quelconque des revendications 14 à 17, **caractérisée en ce que** ledit pivot (38) est supporté par une console (24) déplaçable et réglable en position sensiblement verticale sur un bâti (8) de positionnement de la machine devant ladite plaque tubulaire (3).

19. Machine selon la revendication 18, **caractérisée en ce que** ladite console (24) est déplaçable sensiblement verticalement en étant montée coulissante le long d'au moins un montant (22) sensiblement vertical dudit bâti (8), par au moins deux galets (28) roulant contre des faces opposées dudit montant (22) et montés en rotation autour d'axes (29), de préférence amovibles, s'étendant entre les deux flans (25) d'un étrier de la console (24), lequel étrier est traversé par ledit montant (22).

20. Machine selon l'une quelconque des revendications 18 et 19, **caractérisée en ce que** ladite console (24) est déplaçable sensiblement verticalement dans un cadre (9) dudit bâti (8) et est montée coulissante le long de l'un ou de l'autre de deux montants (22) sensiblement verticaux et latéraux dudit cadre (9).

21. Machine selon l'une quelconque des revendications 19 et 20, **caractérisée en ce que** la console (24) est positionnée verticalement le long dudit montant (22) sur lequel la console (24) coulisse à l'aide d'au moins un ensemble vis sans fin (31)-écrou (30), dont l'écrou (30) est solidaire de ladite console (24), et la vis sans fin (31) est retenue verticalement le long dudit montant (22) et entraînée en rotation par un moteur (37) supporté par le bâti (8).

22. Machine selon la revendication 21 telle que rattachée à la revendication 20, **caractérisée en ce que** les vis sans fin (31) retenues le long des montants (22) du bâti (8) sont entraînées en rotation à la même vitesse par un unique moteur (37), à l'aide d'une transmission à chaîne ou courroie (35) reliant un pignon (36) sur l'arbre de sortie du moteur (37) à des pignons (34) solidaires des vis sans fin (31).

23. Machine selon l'une quelconque des revendications 18 à 22, **caractérisée en ce que** ledit bâti (8) est solidaire d'un chariot (11), de préférence motorisé (18), déplaçable sensiblement transversalement devant ladite plaque tubulaire (3).

24. Machine selon la revendication 23, **caractérisée en ce que** le chariot (11) comprend au moins deux essieux (12), dont l'un au moins est motorisé et entraîné par un autre moteur (18) supporté par le chariot (11), chaque essieu (12) supportant au moins un galet avant (13) à joue (14), roulant et guidé sur un rail avant (16) disposé transversalement devant ladite plaque tubulaire (3), ainsi qu'au moins un galet arrière (15) roulant sur un rail arrière (17) sensiblement parallèle au rail avant (16).

## Patentansprüche

1. Verfahren zum Herausziehen von Rohren (2) aus einem Rohrtauscher (1), wobei diese Rohre rohrförmige Endplatten (3,4) und Zwischenplatten (5) des Tauschers (1) durchsetzen,
**dadurch gekennzeichnet, dass** - nach einem teilweisen Herausziehen wenigstens einer Schale von Rohren (2), deren Achsen etwa in derselben Ebene liegen, derart, dass die auf derselben Seite des Tauschers (1) befindlichen Enden der Rohre (2) nach außen gegenüber der rohrförmigen Platte (3) des entsprechenden Endes vorspringen, - das Verfahren wenigstens folgende Schritte umfasst:
a) es werden von außen die Rohre (2) der genannten Schale in der Nähe der genannten rohrförmigen Platte (3) klemmend erfasst;
b) es wird gleichzeitig auf die erfassten Rohre (2) der genannten Schale ein etwa axialer, längs der Rohrachsen wirkender Zug ausgeübt; so dass eine gerade Länge von Rohren (2) der Schale aus der rohrförmigen Platte (3) herausgezogen wird;
c) es werden die Rohre (2) der genannten Schale freigegeben;
d) es wird der Zyklus der Verfahrensschritte a) bis c) derart wiederholt, dass die Schale von Rohren (2) in aufeinander folgenden geraden Längen herausgezogen wird;
e) die Schale von Rohren (2) wird beim Herausziehen in Eingriff mit einer Schere (55) gebracht;
f) und es wird die Schale von Rohren (2) in aufeinander folgende Stücke (2a, 2b) zerschnitten.

2. Verfahren nach Anspruch 1, **dadurch gekennzeichnet, dass** das Erfassen und Freigeben der Rohre (2) der Schale bei den Verfahrensschritten a) und c) etwa gleichzeitig bei allen Rohren (2) dieser Schale erfolgt.

3. Verfahren nach einem der Ansprüche 1 und 2, **dadurch gekennzeichnet, dass** die Ausübung des Zuges im Verfahrensschritt b) erfolgt, indem von außen gegen die rohrförmige Wand (3) abgestützt wird.

4. Verfahren nach einem der Ansprüche 1 bis 3, **dadurch gekennzeichnet, dass** der Zyklus der Verfahrensschritte a) bis c) hinreichend oft wiederholt wird bis zum gesamten Herausziehen der Rohre (2) der Schale, wobei der Verfahrensschritt f) des Zerschneidens wenigstens bis zum vorletzten Zyklus der Verfahrensschritte a) bis c) ausgeführt wird.

5. Verfahren nach einem der Ansprüche 1 bis 4, **dadurch gekennzeichnet, dass** ein ergänzender Verfahrensschritt vorgesehen ist, bei dem nach jedem Zyklus der Verfahrensschritte a) bis c) auf die Rohre (2) der Schale, ehe sie mit der Schere (55) in Eingriff kommen, eine Rückhaltewirkung ausgeübt wird, die sich einer Rückkehr der Rohre (2) zur rohrförmigen Platte widersetzt.

6. Verfahren nach einem der Ansprüche 1 bis 5, **dadurch gekennzeichnet, dass** auch ein Verfahrensschritt vorgesehen ist, bei dem die Stücke (2a, 2b) der zerschnittenen Rohre (2) mit Hilfe wenigstens eines Bandförderers kontinuierlich oder mittels wenigstens eines Förderwagens diskontinuierlich entleert werden.

7. Vorrichtung zum Herausziehen von Rohren (2) von Tauschern (1), zur Durchführung des Verfahrens nach einem der Ansprüche 1 bis 6, enthaltend:
- eine Zange (53), die wenigstens zwei längliche Spannbacken (57, 58) aufweist, die etwa parallel zueinander und quer zur Schale von Rohren (2) ausgerichtet sind und zwischen einer Rohrerfassungsstellung und einer Rohrfreigabestellung durch eine Backenbetätigungsvorrichtung (67, 65, 64, 63, 62) betätigbar sind;
- eine Zugvorrichtung (54), die wenigstens ein Zugorgan (73) enthält, das die Zange (53) auf einem Trägerchassis (49) hin und her bewegt zwischen einer an die rohrförmige Platte (3) angenäherten Stellung zum Erfassen der Rohre (2) der Schale und einer von der rohrförmigen Platte (3) entfernten Stellung zur Ausübung eines Zuges auf die erfassten Rohre (2) durch Abstützung des Zugorganes (73) an der rohrförmigen Platte (3);
- eine Schere (55), die auf dem Trägerchassis (49) hinter der Zange (53) angeordnet ist und wenigstens ein Messer (79) enthält, das quer zur Schale von Rohren (2) beweglich ist und durch wenigstens ein auf dem Trägerchassis (49) befestigtes Abschneideorgan betätigbar ist;
- sowie Mittel (56) zur Führung und Rückbewegungssicherung, die auf dem Trägerchassis (49) zwischen der Zange (53) und der Schere (55) angeordnet sind und die Rohre (2) der Schale zur Schere (55) führen im Verlaufe des Herausziehens in aufeinander folgenden geraden Längen bei den Bewegungen der Zange (53) in die von der rohrförmigen Platte (3) entfernte Stellung, und die eine Rückbewegung der Rohre (2) der Schale zur rohrförmigen Platte (3) bei den Bewegungen der Zange (53) in die der rohrförmigen Platte (3) angenäherte Stellung verhindern.

8. Vorrichtung nach Anspruch 7, **dadurch gekennzeichnet, dass** die Zange (53) im wesentlichen als auf dem Trägerchassis (49) gleitbewegliche und nach vorn, in Richtung auf die genannte rohrförmige Platte (3) offene Kassette für die Passage der Rohre (2) der Schale angeordnet ist, wobei die beiden Spannbacken (57,58) in Querrichtung in der gleitbeweglichen Kassette derart angeordnet sind, dass sie zwischen sich einen Spalt zum Erfassen der Rohre (2) begrenzen, und dass die Vorrichtung zur Betätigung der Spannbacken (57,58) wenigstens ein Betätigungsorgan (67) enthält, das die Spannbacken (57, 58) derart mitnimmt, dass die Breite des genannten Spaltes zum Erfassen der Rohre (2) verändert wird, so dass in der Erfassungsstellung der Spannbacken die Rohre (2) der Lage teilweise zwischen den Spannbacken (57, 58) erfasst sind.

9. Vorrichtung nach Anspruch 8, **dadurch gekennzeichnet, dass** die Spannbacken (57, 58) um ihre Längsachsen drehbeweglich in den Seiten (60, 61) der gleitbeweglichen Kassette angeordnet und drehfest an wenigstens einem ihrer Enden mit Zahnritzeln (62, 63) verbunden sind, die gegensinnig über ein Zahnradgetriebe (64, 65) angetrieben werden, das mit wenigstens einer Zahnstange (66) in Eingriff steht, die durch wenigstens eine lineare, doppeltwirkende Hilfs-Zylinder-Kolbenanordnung (67) bewegt wird, deren Zylinder (68) bzw. Kolbenstange (69) fest mit der gleitbeweglichen Kassette (53) bzw. mit der auf der Kassette (53) beweglichen Zahnstange (66) verbunden ist.

10. Vorrichtung nach Anspruch 9, **dadurch gekennzeichnet, dass** die Spannbacken (57, 58) eine im wesentlichen zylindrische äußere Form aufweisen und jeweils einen Querschnitt in Gestalt einer Facettenspirale (72) besitzen, die entgegengesetzt zum Drehsinn der Spannbacken beim Schließen divergiert.

11. Vorrichtung nach einem der Ansprüche 8 bis 10, **dadurch gekennzeichnet, dass** die Zugvorrichtung (54) wenigstens ein lineares, doppeltwirkendes Zugorgan (73), wie eine hydraulische Zylinder-Kolbenanordnung, enthält, die vorzugsweise im Trägerchassis (49) geführt ist und deren Zylinder (74) bzw. Kolbenstange (75) fest mit der gleitbeweglichen Kassette (53) bzw. mit dem Trägerchassis (49) verbunden ist, wobei am vorderen Ende des letzteren eine Abstützung an der genannten rohrförmigen Platte (3) vorgesehen ist, vorzugsweise über seitliche Anschläge (77), die fest mit dem vorderen Ende des Trägerchassis (49) verbunden sind.

12. Vorrichtung nach einem der Ansprüche 8 bis 11, **dadurch gekennzeichnet, dass** die Schere (55) ein festes Zahnmesser (78) enthält, das auf dem Trägerchassis (49) quer zur Schale von Rohren (2) befestigt ist, ferner ein bewegliches Messer (79) mit zwei Schneidkanten (80), die geradlinig in V-Form mit auf das feste Messer (78) weisender Spitze angeordnet sind, wobei das bewegliche Messer (79) axial gegenüber dem festen Messer (78) versetzt ist, so dass es längs einer Seite des letzteren gleiten kann, und wobei es ferner in wenigstens einem Bügel (85) geführt ist, der auf dem Trägerchassis (49) befestigt ist und wenigstens ein lineares, doppeltwirkendes Betätigungsorgan, wie eine hydraulische Zylinder-Kolbenanordnung, zur Betätigung des beweglichen Messers (79) trägt.

13. Vorrichtung nach einem der Ansprüche 8 bis 12, **dadurch gekennzeichnet, dass** die Mittel (56) zur Führung und Rückbewegungssicherung der Rohre (2) der Schale zwei Blechplatten (86) enthalten, die quer zur Schale von Rohren (2) angeordnet sowie gegeneinander und zur Schere (55) hin geneigt sind, so dass ein die Rohre (2) der Schale zur Schere (55) führender Trichter gebildet wird, wobei jede der beiden Blechplatten (86) auf ihrer zur Schere hin gewandten Rückseite durch eine Platte (88) aus flexiblem Material, wie Gummi, gedoppelt ist, die sich über den hinteren Rand der entsprechenden Blechplatte (86) bis zum hinteren Ende der zur anderen Blechplatte (86) gehörenden Platte (88) aus flexiblem Material erstreckt, so dass die hinteren Enden der beiden Platten (88) aus flexiblem Material sich bei der Passage der Schale von Rohren (2) voneinander entfernen und sich elastisch gegen die Rohre (2) drücken und dadurch ihre Rückbewegung zur rohrförmigen Platte (3) verhindern.

14. Vorrichtung nach einem der Ansprüche 7 bis 13, **dadurch gekennzeichnet, dass** das Trägerchassis (49), die Zange (53, die Zugvorrichtung (54), die Schere (55) und die Mittel (56) zur Führung und Rückbewegungssicherung auf einem beweglichen Gerät (41) angeordnet sind, das um die Achse eines Zapfens (38) drehbeweglich angeordnet ist, der etwa parallel zu den Achsen der Rohre (2) der Schale vorgesehen ist, wobei die Position dieses beweglichen Gerätes (41) um die Achse des Zapfens (38) über Mittel (42, 43) zur Mitnahme und Drehblockierung derart einstellbar ist, dass die Schale von Rohren (2) jede gewünschte Winkellage um den Zapfen (38) einnehmen kann.

15. Vorrichtung nach Anspruch 14, **dadurch gekennzeichnet, dass** die Mittel zur Mitnahme und Drehblockierung wenigstens einen Zahnkranz (42) auf einem Tragstück (40) enthalten, das wenigstens teilweise als etwa kreisförmige Scheibe ausgebildet ist und das Trägerchassis (49) des beweglichen Gerätes (41) mit dem Zapfen (38) verbindet, wobei der Zahnkranz (42) mit einer Schnecke (43) in Eingriff steht, die drehbar auf einer Halterung (24) des Zapfens (38) angeordnet und vorzugsweise durch einen Elektromotor angetrieben ist.

16. Vorrichtung nach einem der Ansprüche 14 oder 15, **dadurch gekennzeichnet, dass** der Zapfen (38) und das bewegliche Gerät (41) gleichzeitig parallel zur Achse des Zapfens (38) beweglich sind zwischen einer Stellung, in der sich das Trägerchassis (49) gegen die rohrförmige Platte (3) abstützt, vorzugsweise über seitliche Anschläge (77) am vorderen Ende des Trägerchassis (49), und einer Stellung, die von der rohrförmigen Platte (3) entfernt ist, um jegliche Einwirkung auf Organe zu verhindern, die auf der Außenseite der rohrförmigen Platte (3) vorspringen.

17. Vorrichtung nach Anspruch 16, **dadurch gekennzeichnet, dass** der Zapfen (38) um seine Achse drehbeweglich und axial in einer Hülse (27) der Halterung (24) des Zapfens bewegbar angeordnet ist und dass die Schnecke (43), die in Eingriff mit dem Zahnkranz (42) steht, der von einem Tragstück (40) getragen wird, das drehfest und geradlinig verschiebbar mit dem Zapfen (38) ist, drehbar in einem Futteral (43) angeordnet ist, das fest mit einem Tragstück (46) verbunden ist, das mittels Rollen (48) auf einer Platine (47) der Halterung (24) des Zapfens parallel zum Zapfen (38) geradlinig bewegbar ist.

18. Vorrichtung nach einem der Ansprüche 14 bis 17, **dadurch gekennzeichnet, dass** der Zapfen (38) von einer Konsole (24) getragen wird, die verschiebbar und in eine etwa vertikale Position einstellbar auf einem Rahmen (8) zur Positionierung der Vorrichtung vor der rohrförmigen Platte (3) angeordnet ist.

19. Vorrichtung nach Anspruch 18, **dadurch gekennzeichnet, dass** die Konsole (24) gleitbeweglich längs wenigstens einer etwa vertikalen Stütze (22) des Rahmens (8) vorgesehen und dadurch etwa vertikal bewegbar ist über wenigstens zwei Rollen (28), die auf entgegengesetzten Seiten der Stütze (22) rollen und um Achsen (29) drehbeweglich sind, die vorzugsweise auswechselbar zwischen zwei Plättchen (25) eines Bügels der Konsole (24) vorgesehen sind, wobei der Bügel von der Stütze durchsetzt wird.

20. Vorrichtung nach einem der Ansprüche 18 oder 19, **dadurch gekennzeichnet, dass** die Konsole (24) etwa vertikal in einem Gestell (9) des Rahmens (8) bewegbar und längs einer von zwei etwa vertikal und seitlich des Gestells (9) angeordneten Stützen (22) gleitbeweglich ist.

21. Vorrichtung nach einem der Ansprüche 19 oder 20, **dadurch gekennzeichnet, dass** die Konsole (24) vertikal längs der Stütze, auf der die Konsole gleitet, positioniert wird mittels einer Anordnung von Schnecke (31) und Mutter (30), wobei die Mutter (30) fest mit der Konsole (24) verbunden ist und die Schnecke vertikal längs der Stütze festgehalten ist und durch einen vom Rahmen (8) getragenen Motor (37) angetrieben wird.

22. Vorrichtung nach den Ansprüchen 20 und 21, **dadurch gekennzeichnet, dass** die längs der Stützen (22) des Rahmens (8) festgehaltenen Schnecken (31) mit gleicher Geschwindigkeit durch einen einzigen Motor (37) über einen Kettenoder Riementrieb angetrieben werden, der ein Ritzel auf der Abtriebswelle des Motors (37) mit Ritzeln (34) verbindet, die drehfest mit den Schnecken (31) verbunden sind.

23. Vorrichtung nach einem der Ansprüche 18 bis 22, **dadurch gekennzeichnet, dass** der Rahmen (8) fest mit einem vorzugsweise motorisierten Wagen (11) verbunden ist, der etwa quer vor der rohrförmigen Platte (3) bewegbar ist.

24. Vorrichtung nach Anspruch 23, **dadurch gekennzeichnet, dass** der Wagen (11) wenigstens zwei Achsen (12) enthält, von denen wenigstens eine Achse motorisiert ist und von einem weiteren, vom Wagen (11) getragenen Motor (18) angetrieben wird, wobei jede Achse (12) wenigstens eine vordere Rolle (13) mit Seitenwange (14) trägt, die auf einer vorderen Schiene (16) rollt und geführt ist, die quer vor der rohrförmigen Platte (3) angeordnet ist, ferner wenigstens eine hintere Rolle (15), die auf einer etwa parallel zur vorderen Schiene (16) angeordneten hinteren Schiene (17) rollt.

## Claims

1. Method for the extraction of tubes (2) from an exchanger (1) having tubes that pass through tube end plates (3, 4) and intermediate plates (5) of the exchanger (1), **characterised in that**, after partial extraction of at least one row of tubes (2) that have axes in substantially the same plane, so that the ends of the tubes (2) located on the same side of the exchanger (1) project to the outside of the corresponding tube end plate (3), said method comprises at least the stages consisting of:
a) pinching of the tubes (2) of said row on the outside in proximity to said tube plate (3);
b) exertion of substantially axial traction along the tube axes simultaneously on the pinched tubes (2) of said row so as to extract straight lengths of the tubes (2) of the row on the outside of said tube plate (3);
c) releasing of the tubes (2) of said row;
d) repetition of the cycle of the above stages a) to c) so as to extract the row of tubes (2) in successive straight lengths;
e) engagement of the row of tubes (2) being extracted in a shearing tool (55), and
f) shearing of the row of tubes (2) into successive sections (2a, 2b).

2. Method according to claim 1, **characterised in that** the pinching and releasing of the tubes (2) of the row in stages a) and c) respectively are effected substantially simultaneously on all the tubes (2) of said row.

3. Method according to either of claims 1 and 2, **characterised in that** the traction of stage b) is exerted while bearing from the outside against said tube plate (3).

4. Method according to any one of claims 1 to 3, **characterised in that** it consists in repeating the cycle of stages a) to c) a sufficient number of times until the tubes (2) of the row have been completely extracted, the shearing stage f) being carried out at least up to the penultimate cycle of stages a) to c).

5. Method according to any one of claims 1 to 4, **characterised in that** it includes the additional step consisting, after each cycle of stages a) to c), in exerting on the tubes (2) of the row, before engaging same in the shearing tool (55), a retaining action which opposes the return of the tubes (2) towards the tube plate.

6. Method according to any one of claims 1 to 5, **characterised in that** it also includes a stage consisting in continuously removing the sheared sections (2a, 2b) of tubes (2) by means of at least one belt conveyor, or discontinuously by means of a skip.

7. Machine for the extraction of tubes (2) from exchangers (1), for implementing the method according to any one of the preceding claims 1 to 6, **characterised in that** it comprises:
- a pinching device (53) including at least one pair of elongated, substantially parallel opposed jaws (57, 58) disposed transversely to the row of tubes (2) and actuated between positions of clamping and releasing the tubes (2) of the row between the jaws (57, 58) by means of a jaw actuating device (67, 65, 64, 63, 62);
- a traction device (54), comprising at least one traction actuator (73) for reciprocatingly displacing the pinching device (53) on a support frame (49) between a position proximate to the tube plate (3) for clamping the tubes (2) of the row, and a position at a distance from the tube plate (3), said traction actuator (73) bearing against said tube plate (3) to exert traction on the pinched tubes (2);
- a shearing tool (55) arranged on the support frame (49) behind the pinching device (53) and comprising at least one movable blade (79) disposed transversely to the row of tubes (2) and actuated by at least one cutting actuator (82) fixed to the support frame (49), and
- guide and reverse-lock means (56) arranged on the support frame (49) between the pinching device (53) and the shearing tool (55) and guiding the tubes (2) of the row towards the shearing tool (55) during the extraction in successive straight lengths as the pinching device (53) is displaced towards the position at a distance from the tube plate (3), and preventing the tubes (2) of the row from returning towards the tube plate (3) as the pinching device (53) is displaced towards the position proximate to said tube plate (3).

8. Machine according to claim 7, **characterised in that** the pinching device (53) is arranged substantially in a box sliding on the support frame (49) and open towards the front in the direction of said tube plate (3) to allow the tubes (2) of the row to pass through, the two jaws (57, 58) being arranged transversely in the sliding box so as to delimit between them a gap for clamping the tubes (2), and the device for actuating the jaws (57, 58) comprises at least one actuator (67) driving the jaws (57, 58) so as to vary the width of said gap for clamping the tubes (2), such that in the clamping position of the jaws the tubes (2) of the row are partially crushed between the jaws (57, 58).

9. Machine according to claim 8, **characterised in that** the jaws (57, 58) are mounted rotatably about their longitudinal axes in the sides (60, 61) of the sliding box (53) and are rigidly connected in rotation by at least one of their ends to toothed pinions (62, 63) driven in opposite rotational directions by a gear transmission (64, 65) meshing with at least one rack (66) displaced by at least one linear, double-acting booster jack (67), the cylinder (68) and the rod (69) of which move integrally, the one with the sliding box (53) and the other with the rack (66) which is movable on the sliding box (53).

10. Machine according to claim 9, **characterised in that** the jaws (57, 58) have a substantially cylindrical general externally shape and have in each case a cross-section in the form of a spiral having facets (72), which spiral is divergent in the direction opposite to the direction of rotation of the jaws (57, 58) when clamping.

11. Machine according to any one of claims 8 to 10, **characterised in that** the traction device (56) includes at least one double-acting linear actuator (73), such as a hydraulic jack, which is preferably guided in the support frame (49) and the cylinder (74) and rod (75) of which move integrally, the one with the sliding box (53) and the other with the support frame (49), at the front end of said support frame (49) bearing against said tube plate (3), preferably via lateral stops (77) rigidly attached to the front end of the support frame (49).

12. Machine according to any one of claims 8 to 11, **characterised in that** the shearing tool (55) comprises a fixed serrated blade (78) fixed to the support frame (49) transversely to the row of tubes (2) and a movable blade (79) having two rectilinear cutting edges (80) forming a V-shape the point of which is oriented towards the fixed blade (78), the movable blade (79) being offset axially with respect to the fixed blade (78) in order to slide along a face of the latter, and being guided in at least one calliper (85) fixed to the support frame (49) and supporting at least one double-acting linear actuator (82), such as a hydraulic jack, which actuates the movable blade (79).

13. Machine according to any one of claims 8 to 12, **characterised in that** the guide and reverse-lock means (56) for the tubes (2) of the row include two sheet metal plates (86) disposed transversely to the row of tubes (2) and inclined towards one another and towards the shearing tool (55) to form a funnel guiding the tubes (2) of the row towards the shearing tool (55), each of the two sheet-metal plates (86) being backed, on its rear face oriented towards the shearing tool (55), by a sheet (88) of a flexible material, such as rubber, extending beyond the rear edge of the corresponding sheet-metal plate (86) into proximity with the rear end of the sheet (88) of flexible material of the other sheet-metal plate (86), so that the rear ends of the two sheets (88) of flexible material move apart when the row of tubes (2) passes through and bear elastically against the tubes (2) to prevent them from returning towards the tube plate (3).

14. Machine according to any one of claims 7 to 13, **characterised in that** the support frame (49), the pinching device (53), the traction device (54), the shearing tool (55) and said guide and reverse-lock means (56) are arranged in a movable assembly (41) journalled about the axis of a pivot (38) substantially parallel to the axes of the tubes (2) of the row, the position of said movable assembly (41) about the pivot axis (38) being adjustable by means (42, 43) for driving and blocking in rotation, such that the row of tubes (2) may occupy any desired angular position about said pivot (38).

15. Machine according to claim 14, **characterised in that** said means for driving and blocking in rotation include at least one toothed collar (42) on a plate (40) having at least partially the form of a substantially circular disc and connecting the support frame (49) of the movable assembly (41) to the pivot (38), said toothed collar (42) engaging with an endless screw (43) mounted rotatably on a support (24) of the pivot (38) and preferably motorised by an electric motor.

16. Machine according to either of claims 14 and 15, **characterised in that** said pivot (38) and said movable assembly (41) can be moved simultaneously in translation parallel to the pivot axis (38) between a position in which the support frame (49) bears against said tube plate (3), preferably via lateral stops (77) on the front end of the support frame (49), and a position at a distance from said tube plate (3), to avoid any interference with elements projecting from the exterior of said tube plate (3).

17. Machine according to claim 16, **characterised in that** the pivot (38) is mounted rotatably about its axis and can be moved in axial translation in a bush (27) of the pivot support (24), and **in that** said endless screw (43), that engages with said toothed collar (42) supported by a plate (40) integral in rotation and translation with the pivot (38), is mounted rotatably in a sleeve (43) rigidly connected to a bracket (46) which is mounted movably in translation parallel to the pivot (38) by means of rollers (48) on a plate (47) of said pivot support (24).

18. Machine according to any one of claims 14 to 17, **characterised in that** said pivot (38) is supported by a bracket (24) that is displaceable and adjustable in a substantially vertical position on a support structure (8) for positioning the machine in front of said tube plate (3).

19. Machine according to claim 18, **characterised in that** said bracket (24) is displaceable substantially vertically through being mounted slidably along at least one substantially vertical pillar (22) of said support structure (8) by means of at least two rollers (28) running against opposed faces of said pillar (22) and journalled around preferably removable spindles (29) extending between the two side-pieces (25) of a yoke of the bracket (24), through which yoke said pillar (22) passes.

20. Machine according to either of claims 18 and 19, **characterised in that** said bracket (24) is displaceable substantially vertically in a frame (9) of said support structure (8) and is mounted slidably along one or the other of two substantially vertical, lateral pillars (22) of said frame (9).

21. Machine according to either of claims 19 and 20, **characterised in that** the bracket (24) is positioned vertically along said pillar (22) on which the bracket (24) slides by means of a worm (31) and nut (30) assembly, the nut (30) being rigidly connected to said bracket (24) and the worm (31) being retained vertically along said pillar (22) and being driven in rotation by a motor (37) supported by the support structure (8).

22. Machine according to claim 21 as attached to claim 20, **characterised in that** the worms (31) retained along the pillars (22) of the support structure (8) are driven in rotation at the same speed by a single motor (37) by means of a chain or belt transmission (35) connecting a gear wheel (36) on the output shaft of the motor (37) to gear wheels (34) rigidly connected to the worms (31).

23. Machine according to any one of claims 18 to 22, **characterised in that** said support structure (8) is rigidly connected to a carriage (11), preferably motorised (18), which is displaceable substantially transversely in front of said tube plate (3).

24. Machine according to claim 23, **characterised in that** the carriage (11) includes at least two axles (12) at least one of which is motorised and driven by another motor (18) supported by the carriage (11), each axle (12) carrying at least one flanged (14) front roller (13) running and guided on a front rail (16) disposed transversely in front of said tube plate (3), and at least one rear roller (15) running on a rear rail (17) substantially parallel to the front rail (16).
